# FASCICULE DE BREVET EUROPEEN

(11) **EP 4 062 187 B1**
(45) Date de publication et mention de la délivrance du brevet: **27.12.2023**
(21) Numéro de dépôt: 20819809.3
(22) Date de dépôt: 04.11.2020
(51) Int. Cl.: G01S 5/00, G01S 5/02

(54) **PROCÉDÉ DE LOCALISATION D'UNE BALISE DE GÉOLOCALISATION**
VERFAHREN ZUM LOKALISIEREN EINES GEO-TAGS
METHOD FOR LOCATING A GEO-TAG

(30) Priorité: 19.11.2019 FR 1912868
(43) Date de publication de la demande: 28.09.2022
(73) Titulaire: Orange, 92130 Issy-les-Moulineaux (FR)
(72) Inventeur: CAZOULAT, Renaud, 92326 CHATILLON (FR); GLAZIOU, Stéphane, 92326 CHATILLON (FR); LEDUNOIS, Valerie, 92326 Châtillon (FR); MEZA BALANTA, Claudia, 92326 Châtillon (FR)
(86) Numéro de dépôt international: PCT/FR2020/051989
(87) Numéro de publication internationale: WO 2021/099711

(56) Documents cités:
- WO-A1-00/38460
- WO-A1-2015/119546
- US-A1- 2009 128 412
- US-A1- 2009 201 850

## Description

### Domaine technique

L'invention se rapporte au domaine des télécommunications.

L'invention se rapporte plus particulièrement à un procédé de gestion de la transmission de la localisation d'une première balise de géolocalisation apte à communiquer avec une deuxième balise de géolocalisation

Le balise de géolocalisation visée ici est une balise de géolocalisation équipée d'une batterie et apte à émettre des données de localisation aussi appelée balise de traçabilité.

### Etat de la technique

Le marché de l'Internet des objets, aussi connu sous le nom anglo-saxon « Internet of Things », connaît une véritable explosion, tant auprès des particuliers que des entreprises. Les objets connectés sont pour la plupart équipés d'une batterie (rechargeable) ou d'une pile. L'autonomie des objets est donc un réel frein à l'expansion de ces objets.

En particulier, les balises de géolocalisation sont beaucoup utilisées pour localiser et suivre des objets lors de leurs déplacements respectifs. Ces balises sont fixées sur l'objet ou placé dans l'objet et émettent des positions géographiques périodiquement permettant de localiser et de suivre l'objet lors de son déplacement.

Quand un colis est expédié et que l'on souhaite surveiller son déplacement, une balise de géolocalisation est placée à l'intérieur du colis. Durant ce trajet, le colis peut être amené à être transporté dans un réceptacle plus grand, comme un container, une palette ou une remorque de camion, lui-même équipé d'une balise de géolocalisation.

Durant le transport, les différentes balises transmettent leurs informations de localisation respectives, par exemple leurs positions GPS, à destination d'un serveur de traçabilité.

Or, pour chaque balise de géolocalisation, l'envoi de données de localisation au serveur nécessite une phase de connexion au réseau et une phase d'obtention de données de localisation (par exemple des coordonnées GPS). Ces deux phases sont très consommatrices en énergie électrique.

La consommation électrique liée à la communication de données au serveur, par exemple les données de localisation, est quant à elle très faible par rapport aux phases citées ci-dessus.

Au problème visé ci-dessus s'ajoute un autre problème lié au fait que les réceptacles, comme les containers métalliques, agissent souvent comme une cage de faraday, les balises situées dans le réceptacle essayent en vain d'émettre leurs localisations respectives et risquent de ce fait d'épuiser leurs niveaux de batterie rapidement.

Un but à atteindre est donc de diminuer la consommation liée aux deux phases précitées et de réduire les effets négatifs liés aux cages de Faraday.

L'invention vient améliorer la situation.

US2009128412 concerne la détermination de position d'un noeud dans un réseau sur la base d'un algorithme de détermination de distance. L'invention A cet effet, selon un aspect fonctionnel, l'invention a trait à un procédé de gestion de la transmission de la localisation d'une première balise de géolocalisation apte à communiquer avec une deuxième balise de géolocalisation, les balises étant classées en plusieurs catégories respectives, la première balise étant associée à une première catégorie, le procédé comprenant les étapes suivantes dans la première balise :
a. détection d'une proximité entre la première balise (BAL1) et la deuxième balise de géolocalisation (BAL2) ;
b. obtention de la catégorie associée à la deuxième balise (BAL2) ;
c. transmission, à destination de la deuxième balise (BAL2), d'une demande de déport de la gestion de la transmission de la localisation de la première balise, si la catégorie obtenue appartient à une deuxième catégorie de balise.

Contrairement à l'état de la technique où chaque balise de géolocalisation gère isolément la transmission de sa localisation, l'invention propose, dès qu'une proximité est détectée entre une première balise d'une première catégorie et une balise de géolocalisation d'une deuxième catégorie, de déporter, dans la deuxième balise, la gestion de la transmission de la localisation de la première balise. Selon l'invention, la deuxième balise transmet l'identifiant de la première balise et sa propre localisation. L'invention repose sur le fait que le récepteur assimile, du fait de la proximité entre les balises de géolocalisation des deux catégories différentes, la localisation de la première balise à la localisation de la deuxième balise.

Grâce à l'invention, une fois le déport de la gestion réalisé, la première balise modifie son état de façon à consommer moins d'énergie électrique. Par exemple la première balise passe dans un état de veille. De cette manière, seule la deuxième balise de géolocalisation, à qui la première balise à confier la gestion de sa localisation, consomme de l'énergie électrique en particulier lors de la phase de connexion au réseau et lors de la phase d'obtention de données de localisation. L'économie en énergie électrique est d'autant plus considérable que le nombre de premières balises de géolocalisation considérées dans le réceptacle est élevé.

l'invention apporte en outre un autre avantage du fait que la première balise délègue la gestion de la transmission de la localisation à une balise d'une catégorie particulière par exemple une balise associée à un réceptacle qui n'est pas sujet au problème de cage de faraday pour la transmission de données de localisation ; en effet, la deuxième balise associée au réceptacle tel qu'un container peut être placée hors du réceptacle et donc être moins sujet à des problèmes de transmission de données.

Selon un premier mode de mise en oeuvre particulier de l'invention, les catégories sont hiérarchisées ; dans cette configuration, l'étape de transmission est réalisée en fonction des niveaux hiérarchiques desdites catégories. Ce premier mode offre une solution simple pour décider d'un déport de la gestion ou non. Par exemple, l'étape de transmission a lieu si la catégorie associée à la deuxième balise est supérieure au niveau hiérarchique de la première balise.

Selon encore un deuxième mode de mise en oeuvre particulier de l'invention, qui pourra être mis en oeuvre alternativement ou cumulativement avec le précédent mode, la réalisation du déport est précédée d'une réception d'un message d'acquittement issu de la deuxième balise. Ce deuxième mode assure que le déport est effectif avant de décider de modifier l'état électrique de la première balise ; une modification de l'état électrique consistant par exemple à entrer dans un mode consommant peu d'électricité, par exemple un mode de veille.

Selon encore un troisième mode de mise en oeuvre particulier de l'invention, qui pourra être mis en oeuvre alternativement ou cumulativement avec les précédents, le déport est arrêté dès que la première balise est hors de portée de la deuxième balise. Ce troisième mode assure que la deuxième balise cesse de gérer la transmission de la localisation de la première balise ; et plus particulièrement que e deuxième balise cesse de transmettre l'identifiant de la première balise.

Selon un aspect matériel, l'invention se rapporte à une entité de gestion de la transmission de la localisation d'une première balise de géolocalisation apte à communiquer avec une deuxième balise de géolocalisation, les balises étant classées en plusieurs catégories respectives, la première balise étant associée à une première catégorie, l'entité comprenant :
a. un module de détection d'une proximité entre la première balise et une deuxième balise de géolocalisation ;
b. un module d'obtention de la catégorie associée à la deuxième balise ;
c. un module de transmission apte à transmettre, à destination de la deuxième balise, une demande de déport de la gestion de la transmission de la localisation de la première balise, si la catégorie obtenue appartient à une deuxième catégorie de balise.

Selon un autre aspect matériel, l'invention se rapporte à une balise de géolocalisation comprenant une entité de gestion telle que définie précédemment.

Selon un autre aspect matériel, l'invention a trait à un programme d'ordinateur apte à être mis en oeuvre sur une entité de gestion telle que définie ci-dessus, le programme comprenant des instructions de code qui, lorsqu'il est exécuté par un processeur, réalise les étapes du procédé définies ci-dessus.

Enfin, l'invention a trait à un support de données sur lequel a été mémorisée au moins une série d'instructions de code de programme pour l'exécution du procédé défini ci-dessus.

Le support de données peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique tel qu'un un disque dur. D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet. Alternativement, le support d'informations peut être un circuit intégré dans lequel le programme est incorporé, le circuit étant adapté pour exécuter ou pour être utilisé dans l'exécution du procédé en question.

Enfin, signalons ici que, dans le présent texte, le terme « module » ou « entité » peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en oeuvre une fonction ou un ensemble de fonctions telles que décrites pour les modules concernés. De la même manière, un composant matériel correspond à tout élément d'un ensemble matériel (ou hardware) apte à mettre en oeuvre une fonction ou un ensemble de fonctions pour le module concerné (circuit intégré, carte à puce, carte à mémoire, etc.).

L'invention sera mieux comprise à la lecture de la description qui suit, donnée à titre d'exemple et faite en référence aux dessins annexés sur lesquels :
[Fig. 1] La figure 1 représente un système informatique sur lequel est illustré un exemple de réalisation de l'invention.
[Fig. 2] la figure 2 est une vue schématique d'une configuration possible des balises dans un container.
[Fig. 3] la figure 3 est une vue schématique de l'architecture d'une balise de géolocalisation.
[Fig. 4] la figure 4 illustre un exemple d'étapes mises en oeuvre dans le cadre d'un procédé selon un mode de réalisation.
[Fig. 5] la figure 5 illustre un exemple de réalisation dans lequel deux balises de deuxième catégorie communiquent avec la première balise pour déterminer la baise de deuxième catégorie aura la charge de la transmission de la localisation de la première balise.
[Fig. 6] la figure 6 illustre une variante de l'exemple de réalisation illustré sur la figure 5.

### Description détaillée d'un (ou d') exemple(s) de réalisation illustrant l'invention

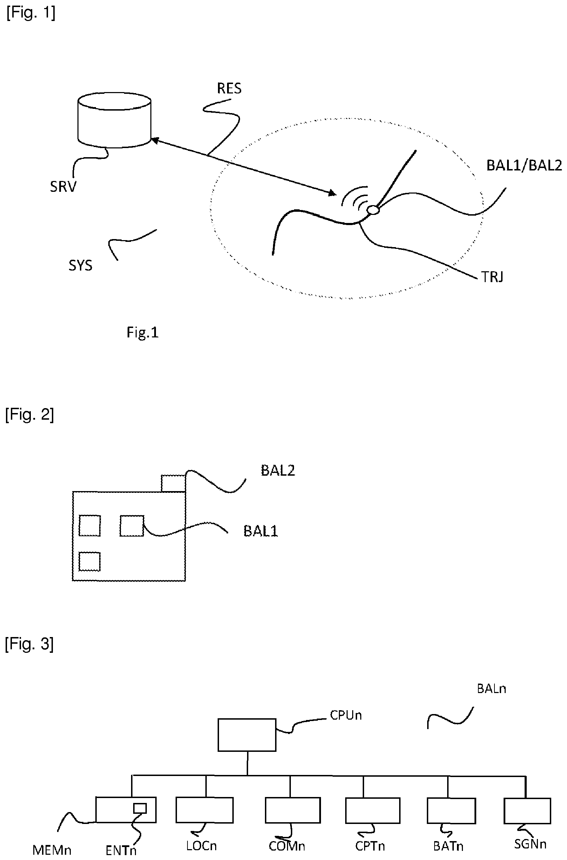

La figure 1 représente un système SYS comprenant des balises de géolocalisation de type balises de traçabilité BAL1-BAL2. Dans notre exemple, ces balises sont associées à des objets ; elles peuvent être par exemple accolées à l'objet ou situées à l'intérieur de l'objet. Un objet est par exemple un colis, une valise, un container, etc. La figure 2 illustre un exemple d'une configuration possible dans laquelle la balise BAL1 est dans un container et la balise BAL2 est apposée sur le container à l'extérieur.

Une balise permet d'obtenir la position de la balise au fil du temps, sous-entendu de l'objet auquel elle est associée. Une balise a pour fonction d'émettre, entre autres, une donnée représentative d'une localisation lors de son transport au cours d'un trajet TRJ.

Les balises sont aptes à communiquer avec un serveur SRV qui reçoit les localisations. La localisation de la balise permet de localiser l'objet auquel elle est associée.

En référence à la figure 3, une balise BALn (n=1,2) a une architecture matérielle d'un ordinateur conventionnel. Elle comporte notamment un processeur CPUn, une mémoire vive de type RAMn (non représentée sur la figure) et une mémoire morte MEMn telle qu'une mémoire de type Flash, ROM, etc.

La balise BALn est apte à émettre des données vers d'autres balises, soit directement ou indirectement. Une communication indirecte pourrait être réalisée au travers d'une passerelle (ou routeur).

Une communication directe pourrait être une liaison de courte portée RES. Un réseau de courte portée se rapporte ici à un réseau ayant une couverture limitée en distance. Dans ce contexte, une première balise BAL1 peut émettre des données en deçà d'une distance donnée, par l'intermédiaire du réseau de courte portée, à au moins une autre balise BAL2. La liaison de courte portée est par exemple un réseau RFiD (Radio Frequency Identification), un réseau Bluetooth, ou tout autre réseau équivalent. A cet effet, une balise est équipée d'un émetteur de données COMn et d'un récepteur de données CPTn apte à recevoir des données, ou plus précisément des signaux, via ce réseau de courte portée.

L'utilisation d'un réseau de courte portée a pour avantage d'identifier des balises de géolocalisation proches les uns des autres, une communication entre deux balises de géolocalisation étant suffisante pour établir une proximité.

L'invention ne se limite pas aux réseaux de courte portée mais s'étend à tous types de réseaux tels qu'un un réseau Wi-Fi, ou équivalents. La proximité entre balises est donc relative en ce qu'elle est fonction du réseau de communication utilisé.

Les balises BAL1/BAL2 sont également aptes à transmettre des données à destination d'un serveur distant de traçabilité SRV via un réseau ayant une plus grande portée ; un tel réseau est par exemple un réseau étendu de type WAN (non représenté sur les figures).

Les balises BAL1-BAL2 sont, dans notre exemple, également équipées de batteries respectives BAT1-BAT3 pour être alimentées électriquement. Rappelons ici que l'invention ne se limite aux balises alimentées par une batterie mais s'étend à toutes balises quelle que soit la source d'alimentation électrique utilisée.

Une balise comprend aussi un module de localisation LOC dont la fonction est l'obtention d'une donnée de localisation représentative de la localisation de la balise, sous-entendu de l'objet auquel elle est associée. Dans notre exemple, le module de localisation est un module (GPS) de géolocalisation (par exemple, de type GPS, pour Global Positioning System). La donnée de localisation peut aussi être une adresse postale, etc.

Les balises appartiennent à des catégories différentes. Dans notre exemple, une première catégorie concerne des balises utilisées pour localisés un objet tel qu'un colis ; une deuxième catégorie concerne des balises utilisées pour localiser des réceptacles tels que des containers pouvant contenir plusieurs objets ou colis.

Selon un mode particulier de réalisation, une balise et pilotée par l'entité ENTn, l'indice « n » (n=1 ou 2) désignant la balise BAL1 ou BAL2) stockée dans la mémoire MEMn. Le programme d'ordinateur ENTn comprend des instructions pour mettre en oeuvre les étapes du procédé de gestion qui sera décrit par la suite, lorsque le programme est exécuté par le processeur CPUn.

L'entité ENT1 a pour fonction de réaliser les étapes suivantes :
- une détection d'une proximité entre la première balise BAL1 et une deuxième balise de géolocalisation BAL2,
- La balise détermine ensuite la catégorie de la deuxième balise ;
- si la deuxième balise est associée à une deuxième catégorie, ce qui est le cas dans notre exemple, la première balise BAL1 transmet une commande de déport (ou de délégation) de la transmission de la localisation à la deuxième balise BAL2. Dans le cas contraire, le procédé s'arrête et la première balise ne modifie pas son fonctionnement.

Dans notre exemple, la commande transmise par la première balise comprend une donnée ID1 identifiant la première balise.

Dans notre exemple, une fois la demande délégation transmise, l'entité ENT1 requiert un changement d'état électrique de la première balise pour qu'elle ne consomme plus ou peu de batterie. Plus particulièrement, dans notre exemple, la balise entre dans un état de veille.

La localisation de l'entité ENT1, tout comme de l'entité ENT2, dans le système SYS est indifférente. Elle peut se situer dans une balise de géolocalisation ou un dispositif extérieur tel qu'un serveur. Dans notre exemple, les entités ENT1 et ENT2 sont située dans la première balise BAL1 et la deuxième balise BAL2, respectivement.

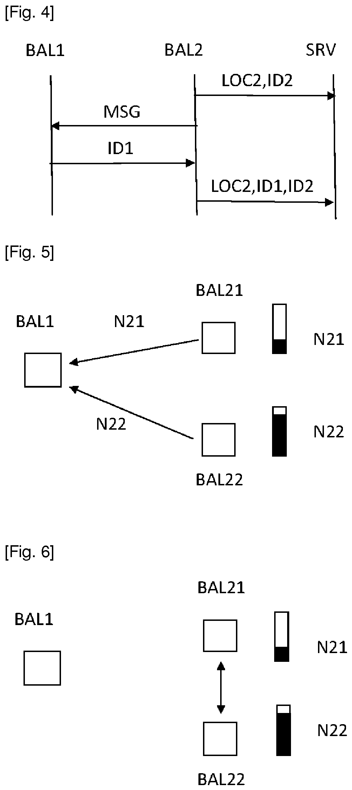

La figure 4 illustre schématiquement les échanges de messages selon un mode de réalisation du procédé de l'invention. Sur cette figure 4, quatre axes sont représentés, à savoir trois axes représentant les deux balises BAL1-BAL2 et un axe SRV représentant le serveur ; les messages échangés sont illustrées au moyen de flèches ayant une origine associée à un axe et une extrémité associée à un autre axe.

A l'initialisation, les instructions de code du programme d'ordinateur sont par exemple chargées dans une mémoire avant d'être exécutées par le processeur CPU. Le processeur CPU de l'unité de traitement met notamment en oeuvre les étapes suivantes :
Lors d'une première étape ET1, les balises BAL1-BAL2 émettent des messages d'annonce incluant leurs identifiants ID1-ID2. La deuxième balise émet en outre une donnée représentative de sa catégorie, à savoir la deuxième catégorie CAT2.

Selon une variante, seules les balises appartenant à la deuxième catégorie transmettent une donnée représentative de leurs catégories. Selon une autre variante, toutes les balises émettent leurs catégories respectives.

Lors d'une deuxième étape ET2, la première balise BAL1 se trouve dans le rayon de couverture de la deuxième balise BAL2 et reçoit à ce titre un message d'annonce de la deuxième balise BAL2. Le type de message diffère selon la technologie utilisée pour la communication. Par exemple, si le protocole UPnP est utilisé, le message peut être un message Alive SSDP ou M-Search selon que la balise est un point de contrôle ou pas ; ce type de message annonce la présence de la balise qui transmet ce message. Dans notre exemple, le message d'annonce inclut une donnée représentative d'une catégorie de balise.

Lors d'une troisième étape ET3, après avoir reçu le message d'annonce, la première balise BAL1 vérifie dans le message reçu la catégorie de la deuxième balise BAL2. Dans notre exemple, la catégorie est une deuxième catégorie distincte de la première catégorie. La deuxième catégorie vise une balise pouvant être associée à un réceptacle de type container.

Lors d'une quatrième étape ET4, la première balise BAL1 émet un message à destination de la deuxième balise BAL2, le message requérant une prise en charge, par la deuxième balise BAL2, de la gestion de la localisation de la première balise. Plus particulièrement, la demande visée est une demande déport dans la deuxième balise BAL2 de la gestion de la transmission de la localisation de la première balise BAL1.

Lors d'une cinquième étape ET5, optionnelle, la deuxième balise BAL2 émet un message d'acquittement ACK à destination de la première balise BAL1. Ce message d'acquittement assure un déport effectif de la gestion de la transmission de la localisation par la deuxième balise BAL2.

Ce message d'acquittement ACK est reçu lors d'une sixième étape ET6. Après réception, la première balise BAL1 ne gère plus la transmission de sa localisation. Dans notre exemple, la première balise BAL1 passe dans un état de veille pour diminuer sa consommation électrique et ainsi augmenter l'autonomie en électricité de sa batterie.

En référence aux figures 5 et 6, une première balise BAL1 peut se trouver à proximité de deux balises de deuxième catégorie. Pour éviter que la première balise délègue la gestion de la transmission de sa localisation à deux balises de deuxième catégorie BAL21/BAL22, plusieurs solutions sont envisageables illustrées sur les figures 5 et 6, respectivement.

En référence à la figure 5, une première solution consiste pour les balises de deuxième catégorie à se transmettre à la première balise BAL1 des niveaux de batterie respectifs N21/N22. Dans ce cas, la première balise BAL1 peut sélectionner une balise de deuxième catégorie en fonction du niveau de batterie N21/N22. Pour ne pas pénaliser une balise de deuxième catégorie, la première balise sélectionne la balise de deuxième catégorie ayant le niveau de batterie le plus élevé.

En référence à la figure 6, une deuxième solution peut consister pour les balises de deuxième catégorie recevant deux demandes de délégation à sélectionner ellesmêmes la balise de deuxième catégorie qui sera sélectionnée. Plus précisément, les étapes sont les suivantes :
La première étape ET1 décrite ci-dessus reste inchangée.

Lors d'une deuxième étape, la première balise BAL1 est dans le rayon de couverture des balises de deuxième catégorie BAL21 et BAL22 et peut à ce titre recevoir des messages d'annonce des deux balises BAL21 et BAL22.

Lors d'une troisième étape, après avoir reçu le message d'annonce, la première balise BAL1 vérifie dans le message reçu les catégories reçues depuis les deux balises. Dans notre exemple, les balises sont des balises de deuxième catégorie.

Lors d'une quatrième étape, la première balise BAL1 émet des messages à destination des deux balises de deuxième catégorie BAL21 et BAL22, les messages requérant une prise en charge, par les balises BAL21 et BAL22, de la gestion de la localisation de la première balise BAL1.

Lors d'une cinquième étape, les balises déterminent le niveau de batterie le plus élevé entre les deux niveaux de batterie.

Dans notre exemple, le niveau de batterie de la balise BAL22 est plus élevé ; la balise BAL22 prend donc en charge la gestion de la transmission de la localisation de la balise BAL1 en lieu et place de la balise BAL1. Dans cet exemple, la balise BAL21 ne gère donc pas la transmission de la localisation pour la première balise BAL1.

Lors d'une étape, la balise BAL22 émet un message d'acquittement ACK. A ce stade, la première balise peut entrer dans un état de veille.

Considérons qu'ultérieurement, la balise BAL22 se déplace et se trouve hors de portée de la première balise BAL1. Supposons aussi que la première balise est dans le rayon de couverture de la deuxième balise BL21 ; Dans ce cas, la deuxième balise BAL21 prend le relais et assure la gestion de la transmission de la localisation de la première balise BAL1.

## Revendications

1. Procédé de gestion de la transmission de la localisation d'une première balise de géolocalisation (BAL1) apte à communiquer avec une deuxième balise de géolocalisation (BAL2), les balises (BAL1,BAL2) étant classées en plusieurs catégories respectives, la première balise étant associée à une première catégorie, le procédé comprend les étapes suivantes dans la première balise (BAL1) :
a. détection d'une proximité entre la première balise (BAL1) et la deuxième balise de géolocalisation (BAL2) ;
b. obtention de la catégorie associée à la deuxième balise (BAL2) ;
c. transmission, à destination de la deuxième balise (BAL2), d'une demande de déport de la gestion de la transmission de la localisation de la première balise, si la catégorie obtenue appartient à une deuxième catégorie de balise, la deuxième catégorie différant de la première catégorie.

2. Procédé selon la revendication 1, **caractérisé en ce que**, les catégories sont hiérarchisées, et **en ce que** l'étape de transmission est réalisée en fonction des niveaux hiérarchiques desdites catégories.

3. Procédé selon l'une des revendications 1 à 2, **caractérisé en ce que** la réalisation du déport est précédée d'une réception d'un message d'acquittement issu de la deuxième balise.

4. Procédé selon la revendication 1, **caractérisé en ce que** le déport est arrêté dès que la première balise est hors de portée de la deuxième balise.

5. Entité de gestion (ENT) de la transmission de la localisation d'une première balise de géolocalisation apte à communiquer avec une deuxième balise de géolocalisation, les balises étant classées en plusieurs catégories respectives, la première balise étant associée à une première catégorie, l'entité comprend :
d. un module de détection d'une proximité entre la première balise et une deuxième balise de géolocalisation ;
e. un module d'obtention de la catégorie associée à la deuxième balise
f. un module de transmission apte à transmettre, à destination de la deuxième balise, une demande de déport de la gestion de la transmission de la localisation de la première balise, si la catégorie obtenue appartient à une deuxième catégorie de balise, la deuxième catégorie différant de la première catégorie.

6. Balise de géolocalisation (BAL1-BAL3) comprenant une entité de gestion telle que définie dans la revendication 5.

7. Programme d'ordinateur apte à être mis en oeuvre sur une balise de géolocalisation, le programme comprenant des instructions de code qui, lorsqu'il est exécuté par un processeur, réalise les étapes du procédé définies dans l'une des revendications 1 à 4.

8. Support de données sur lequel a été mémorisée au moins une série d'instructions de code de programme pour l'exécution d'un procédé défini dans l'une des revendications 1 à 4.

## Patentansprüche

1. Verfahren zur Verwaltung des Sendens der Position eines ersten Geo-Tags (BAL1), das geeignet ist, mit einem zweiten Geo-Tag (BAL2) zu kommunizieren, wobei die Tags (BAL1, BAL2) in mehrere jeweilige Kategorien eingestuft sind, wobei das erste Tag einer ersten Kategorie zugeordnet ist, wobei das Verfahren die folgenden Schritte in dem ersten Tag (BAL1) umfasst:
a. Detektieren einer Nähe zwischen dem ersten Tag (BAL1) und dem zweiten Geo-Tag (BAL2);
b. Erhalten der dem zweiten Tag (BAL2) zugeordneten Kategorie;
c. Senden, an das zweite Tag (BAL2), einer Anforderung zum Übertragen der Verwaltung des Sendens der Position des ersten Tags, wenn die erhaltene Kategorie einer zweiten Tag-Kategorie angehört, wobei die zweite Kategorie von der ersten Kategorie verschieden ist.

2. Verfahren nach Anspruch 1, **dadurch gekennzeichnet, dass** die Kategorien hierarchisiert sind und dass der Schritt des Sendens in Abhängigkeit von den hierarchischen Ebenen der Kategorien ausgeführt wird.

3. Verfahren nach einem der Ansprüche 1 bis 2, **dadurch gekennzeichnet, dass** dem Ausführen der Übertragung ein Empfangen einer aus dem zweiten Tag stammenden Quittierungsnachricht vorausgeht.

4. Verfahren nach Anspruch 1, **dadurch gekennzeichnet, dass** die Übertragung gestoppt wird, sobald das erste Tag außerhalb der Reichweite des zweiten Tags ist.

5. Verwaltungseinheit (ENT) zur Verwaltung des Sendens der Position eines ersten Geo-Tags, das geeignet ist, mit einem zweiten Geo-Tag zu kommunizieren, wobei die Tags in mehrere jeweilige Kategorien eingestuft sind, wobei das erste Tag einer ersten Kategorie zugeordnet ist, wobei die Einheit umfasst:
d. ein Modul zum Detektieren einer Nähe zwischen dem ersten Tag und einem zweiten Geo-Tag;
e. ein Modul zum Erhalten der dem zweiten Tag zugeordneten Kategorie
f. ein Modul zum Senden, das geeignet ist, an das zweite Tag eine Anforderung zum Übertragen der Verwaltung des Sendens der Position des ersten Tags zu senden, wenn die erhaltene Kategorie einer zweiten Tag-Kategorie angehört, wobei die zweite Kategorie von der ersten Kategorie verschieden ist.

6. Geo-Tag (BAL1-BAL3), das eine Verwaltungseinheit wie in Anspruch 5 definiert umfasst.

7. Computerprogramm, das geeignet ist, auf einem Geo-Tag eingesetzt zu werden, wobei das Programm Codeanweisungen umfasst, die bei seiner Ausführung durch einen Prozessor die in einem der Ansprüche 1 bis 4 definierten Schritte des Verfahrens ausführen.

8. Datenträger, auf dem mindestens eine Reihe von Programmcodeanweisungen zur Ausführung eines in einem der Ansprüche 1 bis 4 definierten Verfahrens gespeichert worden ist.

## Claims

1. Method for managing the transmission of the location of a first geo-tag (BAL1) able to communicate with a second geo-tag (BAL2), the tags (BAL1, BAL2) being classified into a plurality of respective categories, the first tag being associated with a first category, the method comprising the following steps in the first tag (BAL1):
a. detecting proximity between the first tag (BAL1) and the second geo-tag (BAL2);
b. obtaining the category associated with the second tag (BAL2);
c. transmitting, to the second tag (BAL2), a request to transfer the management of the transmission of the location of the first tag, if the obtained category belongs to a second tag category, the second category being different from the first category.

2. Method according to Claim 1, **characterized in that** the categories are ranked, and **in that** the transmission step is performed based on the hierarchical levels of said categories.

3. Method according to either of Claims 1 and 2, **characterized in that** the transfer is preceded by reception of an acknowledgement message from the second tag.

4. Method according to Claim 1, **characterized in that** the transfer is stopped as soon as the first tag is out of range of the second tag.

5. Management entity (ENT) for managing the transmission of the location of a first geo-tag able to communicate with a second geo-tag, the tags being classified into a plurality of respective categories, the first tag being associated with a first category, the entity comprising:
d. a detection module for detecting proximity between the first tag and a second geo-tag;
e. an obtainment module for obtaining the category associated with the second tag;
f. a transmission module able to transmit, to the second tag, a request to transfer the management of the transmission of the location of the first tag, if the obtained category belongs to a second tag category, the second category being different from the first category.

6. Geo-tag (BAL1-BAL3) comprising a management entity as defined in Claim 5.

7. Computer program able to be implemented on a geo-tag, the program comprising code instructions, which, when it is executed by a processor, performs the steps of the method that are defined in one of Claims 1 to 4.

8. Data medium storing at least one series of program code instructions for executing a method defined in one of Claims 1 to 4.
